# EUROPÄISCHE PATENTSCHRIFT

(11) **EP 2 611 684 B1**
(45) Veröffentlichungstag und Bekanntmachung des Hinweises auf die Patenterteilung: **15.07.2015**
(21) Anmeldenummer: 11735801.0
(22) Anmeldetag: 20.07.2011
(51) Int. Cl.: B62M 9/10, B62M 6/55

(54) **KURBELSET FÜR EIN MOTORISIERTES FAHRRAD**
CRANKSET FOR A MOTORIZED CYCLE
PÉDALIER POUR UNE BICYCLETTE MOTORISÉE

(30) Priorität: 31.08.2010 AT 53810 U
(43) Veröffentlichungstag der Anmeldung: 10.07.2013
(73) Patentinhaber: EGO Sports GmbH, 5301 Eugendorf (AT)
(72) Erfinder: Preining, Daniel, 5020 Salzburg (AT); Eitschberger, Matthias, 71672 Marbach (DE)
(74) Vertreter: DTS Patent- und Rechtsanwälte Schnekenbühl und Partner mbB
(86) Internationale Anmeldenummer: PCT/EP2011/003637
(87) Internationale Veröffentlichungsnummer: WO 2012/028226

(56) Entgegenhaltungen:
- DE-C- 892 561
- FR-A1- 2 921 630
- GB-A- 2 440 132
- US-A- 5 213 550
- US-A- 5 426 997
- US-A1- 2008 207 369
- US-B1- 6 352 131

## Beschreibung

Die Erfindung betrifft ein Kurbelset, das für ein motorisiertes Fahrrad, insbesondere ein elektrisch motorisiertes Fahrrad verwendbar ist.

Die FR 2 921 630 A1 zeigt ein mehrstufiges Kurbelset mit den Merkmalen des Oberbegriffes des Anspruchs 1, umfassend Kurbeln und eine Vielzahl von Kettenblättern, die mittels Drehung der Kurbeln angetrieben sind und mit einem Antriebsmittel in Eingriff stehen, wobei das Set einen Freilauf umfasst, der zwischen den Kettenblättern und den Kurbeln angeordnet ist, um ein Antreiben mittels Drehung der Kurbeln in einer ersten Richtung zu erlauben und um diese in einer anderen Richtung voneinander zu trennen.

Die US 6,352,131 B1 zeigt einen unidirektionale Drehbaugruppe in Verbindung mit einem Fahrradantriebsmechanismus

Aufgabe der vorliegenden Erfindung ist es, die Nachteile des Stands der Technik zu verbessern.

Die Aufgabe wird durch die unabhängigen Ansprüche gelöst. Vorteilhafte Weiterbildungen sind in den Unteransprüchen definiert.

Insbesondere wird die Aufgabe gelöst durch ein Kurbelset für ein Fahrrad, wobei das Kurbelset eine Freilaufeinrichtung (25, 26, 29) mit Löchern zur Befestigung von Kettenblättern (5, 27, 28) aufweist, wobei die Löcher gemäß mindestens zweier verschiedener Lochkreise mit Durchmessern L1 und L2 ringförmig angeordnet sind und eines der montierbaren Kettenblätter (5, 27, 28) ein Motorkettenblatt (5) ist und das Kurbelset eine Kettenführungsscheibe (59) aufweist, die zwischen das Motorkettenblatt (5) und die übrigen Kettenblätter (27, 28) montierbar ist.

Die Kettenführungsscheibe weist bevorzugt einen größeren Durchmesser als die vorhandenen Kettenblätter auf. Durch diese Scheibe wird verhindert, dass die Antriebskette zum Hinterrad auf das Motorkettenblatt läuft und dass die Antriebskette zum Motor auf ein Kettenblatt für die Antriebskette zum Hinterrad läuft. Es wird ein Abspringen der beiden Ketten bzw. Zahnriemen verhindert.

Das Motorkettenblatt ist bevorzugt zur Führung einer Kette zu einem Elektromotor eingerichtet, während andere Kettenblätter zur Führung einer Kette zum Hinterrad eingerichtet sind.

Durch die erfindungsgemäße Freilaufeinrichtung sind verschiedene Kettenblätter montierbar und über einen Freilauf von der Tretkurbel getrennt. Somit können verschieden große Kettenblätter einfach montiert werden oder z.B. die vorhandenen Kettenblätter des Fahrrads mitsamt der vorhandenen Gangschaltung verwendet werden, wenn dieses mit einem Elektroantrieb nachgerüstet wird, so dass eines dieser Kettenblätter über eine extra Kette durch einen Motor angetrieben wird. Die gebräuchlichen Kettenblätter weisen üblicherweise verschiedene Lochkreise auf, so dass mit der erfindungsgemäßen Freilaufeinrichtung eine Kompatibilität zu auf dem Markt vorhandenen Kettenblättern erreichbar ist während im Stand der Technik speziell angefertigte Kettenblätter notwendig sind. Die Freilaufeinrichtung ist damit flexibel für verschiedene Kettenblätter einsetzbar. Die Freilaufeinrichtung erlaubt die Drehung zweier gegeinander verdrehbarer Komponenten des Freilaufs nur in einer Drehrichtung. An einer verdrehbaren Komponente ist eine Kurbel anbringbar und an der anderen verdrehbaren Komponente mindestens ein Kettenblatt, bevorzugt bis zu drei Kettenblätter. Durch die Freilaufeinrichtung wird ein Betriebsmodus unterstützt, in dem ohne Pedalieren nur mit Motorantrieb gefahren wird.

Je Lochkreis sind bevorzugt mindestens drei bevorzugt vier, fünf oder mehr Löcher in der Freilaufeinrichtung eingebracht. Bevorzugt weisen die Löcher, bevorzugt die des Lochkreises mit Durchmesser L1, ein Innengewinde auf, wodurch kleine Kettenblätter ohne Gewindehülsen direkt anschraubbar sind.

In einem weiteren Ausführungsbeispiel der vorliegenden Erfindung sind L1 und L2 gleich Durchmessern der Lochkreise der montierbaren Kettenblätter (5, 27, 28).

L1 ist bevorzugt der Durchmesser des Lochkreises für ein kleines Ketteblatt mit bevorzugt 20 bis 24, besonders bevorzugt 22 Zähnen. L1 liegt bevorzugt im Bereich von 50 mm bis 80 mm und beträgt bevorzugt 58 mm, besonders bevorzugt 64 mm.

L2 ist bevorzugt der Durchmesser des Lochkreises eines Kettenblatts mittlerer Größe, mit 30 bis 38 Zähnen, bis großer Größe, mit mehr als 38 Zähnen am Kettenblatt. L2 liegt bevorzugt im Bereich von 90 mm bis 146 mm, besonders bevorzugt 100 mm bis 120 mm, und beträgt besonders bevorzugt 104 mm.

Bevorzugt weisen die Lochkreise mit Durchmessern L1 und L2 dieselben Anzahlen von Löchern auf wie Lochkreise der montierbaren Kettenblätter.

In einem weiteren Ausführungsbeispiel der vorliegenden Erfindung weist die Freilaufeinrichtung (25, 26) einen Kettenblattadapter (25) und einen Freilauf (26) auf, die miteinander durch Schrauben (35) verschraubbar sind.

Der Kettenblattadapter ist bevorzugt eine ringförmige Scheibe, bevorzugt mit einer inneren Eintiefung, mit einem ersten Ring von mindestens drei bevorzugt vier, fünf oder mehr Löchern, die für die Montage des Freilaufs und bevorzugt eines kleinen Kettenblatts bestimmt sind und bevorzugt gemäß dem Lochkreisdurchmesser L1 angeordnet sind, und einen zweiten Ring von mindestens drei, bevorzugt vier oder mehr Löchern, die für die Montage von Kettenritzeln bestimmt sind und bevorzugt gemäß dem Lochkreisdurchmesser L2 angeordnet sind. Bevorzugt sind die Löcher des zweiten Rings in Ausbuchtungen des Kettenblattadapters angeordnet. An dem Kettenblattadapter sind bevorzugt Kettenblätter mit 104 mm Lochkreis (z. B. 32-46 Zähne) wie auch Kettenblätter mit 20 bis 24, z. B. 22 Zähnen, und kleinen Lochkreis (58 mm, 64 mm) befestigbar.

Der Freilauf weist bevorzugt einen Ring mit drei, bevorzugt vier oder mehr, Löchern für die Montage des Kettenblattadapters auf, wobei die Löcher bevorzugt gemäß einem Lochkreisdurchmesser L3 angeordnet sind. Wenn L1 und L3 unterschiedlich sind, weist der Kettenblattadapter zusätzliche Löcher in einer Anordnung gemäß Lochkreisdurchmesser L3 für die Fixierung des Freilaufs am Kettenblattadapter sowie einen Lochkreis mit Durchmesser L1 für ein kleines Kettenblatt auf.

Durch den Kettenblattadapter ist auch eine kostengünstige Produktion möglich. Der Freilauf ist wegen der hohen Kräfte bevorzugt aus Edelstahl, das gegenüber Aluminium in der Verarbeitung teuer und schwer ist. Durch den Adapter können der Adapter selbst und auch die Kettenblätter aus günstigeren und auch leichteren Materialien wie z. B. Alu vorgesehen werden. Eine Herstellung eines Freilaufs mit integral angebrachtem Kettenblattadapter bedarf eines höheren Materialaufwand von teurem Material, der insbesondere durch den anfallenden Verschnitt noch weiter erhöht wird. Daher führt diese Lösung zu hoher Flexibilität, geringem Gewicht und kostengünstiger Produktion.

In einem weiteren Ausführungsbeispiel der vorliegenden Erfindung weist der Freilauf (26) Löcher auf, die gemäß mindestens einem Lochkreis mit Durchmesser L3 ringförmig angeordnet sind, wobei L3 der gleiche Durchmesser ist wie einer der Durchmesser L1 und L2.

Auf diese Weise ist durch dieselben Schrauben sowohl der Freilauf an den Kettenblattadapter als auch mindestens ein Kettenblatt mit dem Lochkreisdurchmesser L3 an den Kettenblattadapter anschraubbar, bei der Montage Schrauben eingespart werden können.

In einem weiteren Ausführungsbeispiel der vorliegenden Erfindung weist die Freilaufeinrichtung (25, 26, 29) eine axiale Öffnung mit einem Innengewinde auf, wobei in die Öffnung eine Tretkurbel (30), welche ein axiales Außengewinde aufweist, einschraubbar ist. Auf diese Weise ist eine schnelle Montage der Kurbel an dem Freilauf durchführbar.

Die Erfindung soll nun anhand von Zeichnungen beispielhaft weiter veranschaulicht werden. Hierbei zeigen:
- Figur 1: ein erfindungsgemäßes Kurbelset, wobei mindestens die Freilaufeinrichtung 29 Bestandteil dieses Kurbelsets ist,
- Figur 2: ein weiteres erfindungsgemäßes Kurbelset, bei dem die Freilaufeinrichtung 25, 26 aus einem Freilauf 26 und einem Kettenblattadapter 25 besteht.

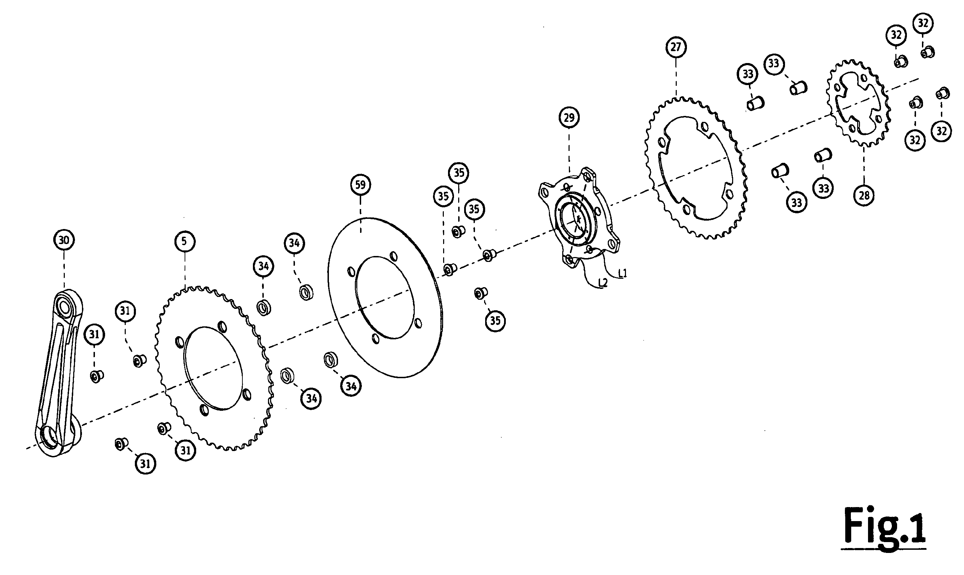

Fig. 1 zeigt ein erfindungsgemäßes Kurbelset, wobei mindestens die Freilaufeinrichtung 29 Bestandteil dieses Kurbelsets ist. Die Freilaufeinrichtung 29 weist einen inneren Lochring mit vier (bevorzugt 3-5) Löchern und mit einem Lochkreisdurchmesser L1 von 58 mm oder 64 mm auf. Mit den äußeren vier (bevorzugt 3-5) ringförmig (Durchmesser des Rings bzw. Lochkreises L2=104 mm) angeordneten Löchern der Freilaufeinrichtung 29 ist mittels Gewindehülsen 33 und Schrauben 31 mindestens ein erstes Kettenblatt 27 mit 36 (bevorzugt 30-48) Zähnen und entsprechendem Lochkreis mit Durchmesser L2 befestigbar. Weiterhin ist ein zweites Kettenblatt 28 mit 22 (bevorzugt 20-28) Zähnen und entsprechendem, im Vergleich zu dem Kettenblatt 27 kleineren Lochkreisdurchmesser L1 über den inneren Lochring mittels Schrauben 32 und 35 befestigbar. Mittels Schrauben 31 und Distanzhülsen 34 ist das Motorkettenblatt 5 mit einer dazwischen liegenden Kettenführungsscheibe 59 an der Freilaufeinrichtung 29 montierbar. Die Tretkurbel 30 wird in die Freilaufeinrichtung 29 über ein Außengewinde der Tretkurbel 30 und ein Innengewinde der Freilaufeinrichtung 29 geschraubt.

Aufgrund dieser Freilaufeinrichtung 29 sind vorhandene Kettenblätter nutzbar und um das Motorkettenblatt 5 erweiterbar, wobei auch ein Kettenführungsblatt 59 dazwischenschaltbar ist. Durch die Freilaufeinrichtung 29 sind die verschiedenen Betriebsmodi des Elektrofahrrads möglich. Die bisherigen Gänge des Fahrrads sind damit weiterhin wie gewohnt nutzbar.

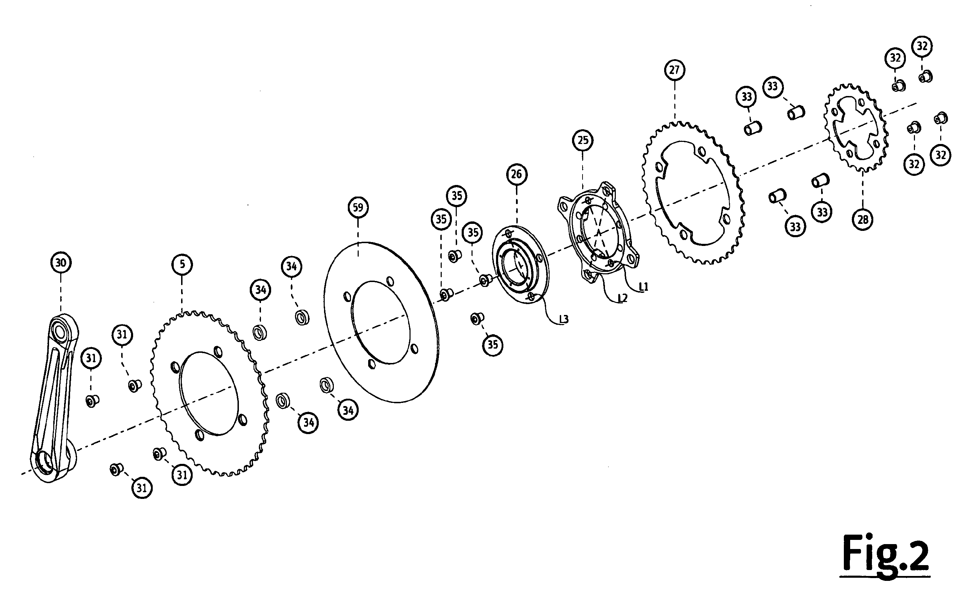

Fig. 2 zeigt ein weiteres erfindungsgemäßes Kurbelset, bei dem die Freilaufeinrichtung 25, 26 aus einem Freilauf 26 und einem Kettenblattadapter 25 besteht. Der Kettenblattadapter 25 weist wie die Freilaufeinrichtung 29 aus Fig. 1 einen inneren Lochring mit Lochkreisdurchmesser L1 auf, wobei an diese Löcher der Freilauf 26 mit seinen vier (bevorzugt 3-5) Löchern gemäß Lochkreisdurchmesser L3, der gleich L1 ist, mittels Schrauben 35 befestigbar ist. Wie die Freilaufeinrichtung 29 aus Fig. 1 weist der Kettenblattadapter 25 einen äußeren Ring aus Löchern mit Lochkreisdurchmesser L2 auf, an welchem größere Kettenblätter befestigbar sind.

Durch die Verwendung des Kettenblattadapters 25 mit anschraubbarem Freilauf 26 anstatt einer integralen Freilaufeinrichtung 29 sind Freilauf 26 und Kettenblattadapter 25 aus verschiedenen Materialien fertigbar. Der Kettenblattadapter 25 besteht aus Aluminium, während der notwendigerweise aus robusterem Material zu fertigende Freilauf 26 aus Edelstahl gefertigt ist. Die notwendige Menge des schweren und teuren Edelstahl wird daher reduziert was zu einer Gewichts- und Kostenotpimierung führt. Zudem wird durch die Aufteilung der Freilaufeinrichtung in Freilauf 26 und Kettenblattadapter 25 eine Reduktion des nicht vermeidbaren Verschnitts bei der Fertigung der Einzelteile erreicht.

In einem anderen Ausführungsbeispiel ähnlich dem in Fig. 2 gezeigten ist L3 aufgrund der vorgegebenen Größe des Freilaufs 26 größer als L1 für kleine Kettenblätter 28. Daher weist der Kettenblattadapter 25 vier Löcher zur Montage des Freilaufs 26 am Kettenblattadapter 25 auf. Weiters befinden sich am Kettenblattadapter 25 vier weitere seitlich versetzte Löcher eines Lochkreisdurchmessers L1 für eine Montage von kleinen Kettenblättern 28.

Mit dieser Erfindung ist eine Möglichkeit bereitgestellt worden, Kettenblätter verschiedener Lochkreisgrößen, wie sie in der Fahrradindustrie üblich sind, in einfacher Weise mittels Schrauben an eine Freilaufeinrichtung zu schrauben. Auf diese Weise können die vorhandenen Kettenblätter eines Fahrrads verwendet werden. Während große Kettenblätter zum Beispiel an die Löcher, die mit Lochkreisdurchmesser L2 angeordnet sind, anschraubbar sind, sind kleinere Kettenblätter mit kleinerem Lochkreis an die Löcher, die mit Lochkreisdurchmesser L1 angeordnet sind, anschraubbar. In einer bevorzugten Variante besteht die Freilaufeinrichtung aus einem Kettenblattadapter und einem Freilauf. Auf diese Weise sind Gewicht und Kosten optimierbar, da der Adapter und der Freilauf aus dem je hinsichtlich Kosten, Gewicht und Stabilität geeignetsten Material fertigbar sind.

### Bezugszeichen

- 5: Motorkettenblatt
- 25: Kettenblattadapter
- 26: Freilauf
- 27: Kettenblatt
- 28: Kettenblatt
- 29: Freilauf mit integriertem Kettenblattadapter
- 30: Tretkurbel
- 31: Schraube
- 32: Schraube
- 33: Gewindehülse
- 34: Distanzring
- 35: Schraube
- 59: Kettenführungsscheibe

## Patentansprüche

1. Kurbelset für ein Fahrrad, wobei das Kurbelset eine Freilaufeinrichtung (25, 26, 29) mit Löchern zur Befestigung von Kettenblättern (5, 27, 28) aufweist, wobei die Löcher gemäß mindestens zweier verschiedener Lochkreise mit Durchmessern L1 und L2 ringförmig angeordnet sind, **dadurch gekennzeichnet, dass** eines der montierbaren Kettenblätter (5, 27, 28) ein Motorkettenblatt (5) ist und das Kurbelset eine Kettenführungsscheibe (59) aufweist, die zwischen das Motorkettenblatt (5) und die übrigen Kettenblätter (27, 28) montierbar ist.

2. Kurbelset nach Anspruch 1,
wobei L1 und L2 gleich Durchmessern der Lochkreise der montierbaren Kettenblätter (5, 27, 28) sind.

3. Kurbelset nach einem der vorhergehenden Ansprüche, wobei die Freilaufeinrichtung (25, 26) einen Kettenblattadapter (25) und einen Freilauf (26) aufweist, die miteinander durch Schrauben (35) verschraubbar sind.

4. Kurbelset nach Anspruch 3,
wobei der Freilauf (26) Löcher aufweist, die gemäß mindestens einem Lochkreis mit Durchmesser L3 ringförmig angeordnet sind, wobei L3 der gleiche Durchmesser ist wie einer der Durchmesser L1 und L2.

5. Kurbelset nach einem der vorhergehenden Ansprüche,
wobei die Freilaufeinrichtung (25, 26, 29) eine axiale Öffnung mit einem Innengewinde aufweist, und wobei in die Öffnung eine Tretkurbel (30), welche ein axiales Außengewinde aufweist, einschraubbar ist.

## Claims

1. A crank set for a bicycle, wherein the crank set comprises a freewheel device (25, 26, 29) with holes for the attachment of chain rings (5, 27, 28), wherein the holes are arranged in a ring-shaped manner according to at least two different hole circles with diameters L1 and L2, **characterised in that** one of the mountable chain rings (5, 27, 28) is a motor chain ring (5), and the crank set comprises a chain guide disc (59) that is mountable between the motor chain ring (5) and the retaining chain rings (27, 28).

2. The crank set according to claim 1,
wherein L1 and L2 are equal to diameters of the hole circles of the countable chain rings (5, 27, 28).

3. The crank set according to one of the preceding claims
wherein the freewheel device (25, 26) comprises a chain ring adapter (25) and a freewheel (26) that can be connected to each other by means of screws (35).

4. The crank set according to claim 3,
wherein the freewheel (26) comprises holes that are arranged in a ring-shaped manner according to at least one hole circle with diameter L3, wherein L3 is the same diameter as one of the diameters L1 and L2.

5. The crank set according to any one of the preceding claims,
wherein the freewheel device (25, 26, 29) comprises an axial aperture with an internal thread, and wherein a pedal crank (30) that comprises an axial external thread can be screwed into the aperture.

## Revendications

1. Pédalier pour un vélo, dans lequel le pédalier présente un dispositif de roue libre (25, 26, 29) avec des trous pour attacher des plateaux (5, 27, 28), sacrant que les trous sont disposés en anneau selon au moins deux cercles à trous différents ayant des diamètres L1 et L2, **caractérisé en ce que** l'un des plateaux (5, 27, 28) pouvant être montés est un plateau à moteur (5) et le pédalier présente une disque guide-chaîne (59) qui peut être monté entre le plateau à moteur (5) et les plateaux (27, 28) restants.

2. Pédalier selon la revendications 1, dans lequel L1 et L2 sont égaux aux diamètres des cercles à trous des plateaux (5, 27, 28) pouvant être montés.

3. Pédalier selon l'une des revendications précédentes, dans lequel le dispositif de roue libre (25, 26) présente un adaptateur de plateau (25) et une roue libre (26) qui peuvent être vissés l'un à l'autre par des vis (35).

4. Pédalier selon la revendication 3, dans lequel la roue libre (26) présente des trous qui sont disposés de façon annulaire selon au moins un cercle à trous de diamètre L3, sachant que L3 est le même diamètre que l'un des diamètres L1 et L2.

5. Pédalier selon l'une des revendications précédentes, dans lequel le dispositif de roue libre (25, 26, 29) présente une ouverture axiale avec un filet femelle, et dans lequel une manivelle (30) qui présente un filet mâle axial peut être vissée dans l'ouverture.
